# EUROPEAN PATENT APPLICATION

(11) **EP 4 701 008 A1**
(43) Date of publication of application: **25.02.2026**
(21) Application number: 24195712.5
(22) Date of filing: 21.08.2024
(51) Int. Cl.: H02B 1/20, H01R 4/34, H02G 5/00, H01R 4/44, H02G 5/02

(54) **BUSBAR CONNECTOR AND BUSBAR SYSTEM**

(71) Applicant: ABB SCHWEIZ AG, 5400 Baden (CH)
(72) Inventor: ROTH, Michael, 77880 Sasbach (DE)
(74) Representative: Maiwald GmbH

(57) **Abstract**

The disclosure relates to a busbar connector (10) with a housing (100) and at least one connection arrangement (200), the housing (100) being configured to receive the at least one connection arrangement (200), and the at least one connection arrangement (200) comprising a fastener element (210) and a counter element (220) for electrically connecting a pair of collinearly arranged busbars (2), the fastener element (210) comprising a shaft (212) with a shaft section (213) for opposing ends (5) of the busbars (2), wherein:
(a) the shaft section (213) comprises two opposing first portions (214) for facing the ends (5) of the busbars (2), and the shaft section (213) comprises two opposing second portions (215) adjacent to or in between the two opposing first portions (214), the shaft section (213) having a smaller thickness between the two opposing first portions (214) than between the two opposing second portions (215); and/or
(b) the fastener element (210) comprises a further shaft section (214), the shaft section (213) comprising a cross-section that is narrower than a cross-section of the further shaft section (214) so that the pair of collinearly arranged busbars (2) can be spaced apart by a distance smaller than the cross-section of the further shaft section (214).

## Description

### TECHNICAL FIELD

The present invention relates to a busbar connector, in particular for a distribution cabinet, and a busbar system, in particular in the form of a distribution cabinet, e.g., a meter cabinet.

### BACKGROUND

Distribution cabinets, such as meter cabinets, can be divided into different distribution fields or, in other words, panels, such as but not limited to meter fields. The distribution fields are typically arranged next to each other within the distribution cabinet and are electrically connected to one another by one or more busbar connectors. Specifically, the distribution fields typically comprise a plurality of busbars. Typically, such distribution field comprises several pairs of busbars. The busbars of each pair are substantially collinearly aligned or, in other words, arranged in a row, and their longitudinal ends are spaced apart from each other such that the one or more busbar connectors may be provided in between the space and connect a pair of busbars. Further, each pair or row of busbars is typically arranged in parallel to and spaced apart from the other pairs of busbars.

To connect these busbars in a distribution system, busbar connectors are known from the prior art, which are used to connect two collinearly arranged busbars of two adjacent or, in other words, neighboring distribution fields. The busbars can be connected in pairs using these busbar connectors. These busbar connectors often consist of brass profiles that are attached to the collinear busbars by means of a pivoting movement.

Another busbar connector is known from DE 102019107465 B3. This busbar connector comprises a housing and at least one connecting device accommodated in the housing for connecting two substantially collinear busbars in pairs, wherein the connecting device comprises a contact piece, a disk spring, a counter bearing and a screw with a screw head.

However, the busbar connectors in the prior art are not able to be used in busbar systems with different rated currents. Rather, they are designed for a specific rated current and hence, depending on the rated current of the busbar system, a different busbar connector needs to be used.

For example, in standard VDE0603, there are two busbar fields that have a 40mm busbar spacing. These busbar fields are fitted with 12x5mm and 2x 12x5mm (12x10mm) copper busbars. The busbar fields with 12x5mm copper busbars achieve a rated current of 250A and the busbar fields with 2x 12x5mm copper busbars achieve a rated current of 355A.

Hence, there is a need for a busbar connector, which may be used for different rated currents of busbar systems, while still being easy to mount and associated with low manufacturing costs.

### SUMMARY

The above problem is at least partially solved or alleviated by the subject matters of the independent claims and aspects of the present disclosure, wherein further examples are incorporated in the dependent claims and examples of the present disclosure.

According to an aspect of the present disclosure, there is provided a busbar connector with a housing and at least one connection arrangement. The housing may be configured to receive the at least one connection arrangement. The at least one connection arrangement may be comprising a fastener element and a counter element for electrically connecting a pair of collinearly arranged busbars. The fastener element may be comprising a shaft with a shaft section for opposing ends of the busbars. The shaft section may comprise two opposing first portions for facing the ends of the busbars, and the shaft section may comprise two opposing second portions adjacent to or in between the two opposing first portions, the shaft section having a smaller thickness between the two opposing first portions than between the two opposing second portions, in particular so that the pair of collinearly arranged busbars can be spaced apart by a distance smaller than the thickness of the two opposing second portions. Alternatively, or additionally, the fastener element may comprises a further shaft section (or second shaft section), the shaft section (or first shaft section) comprising a cross-section that is narrower than a cross-section of the further shaft section, in particular so that the pair of collinearly arranged busbars can be spaced apart by a distance smaller than the cross-section of the further shaft section.

Generally, the terms busbar connector, housing and connection arrangement are herein to be interpreted broadly. The busbar connector may be used to connect the respective pairs of busbars electrically with one another. The housing may be generally made from an electrically non-conductive material such as but not limited to plastic. On the other hand, the at least one connection arrangement or its components may be made from an electrically conductive material such as but not limited to metal, e.g., copper, tin, brass, steel, and similar. The housing may be generally understood as a housing to house or accommodate the at least one connection arrangement. Alternative terms for the housing may be connection structure and/or accommodation structure. The housing may generally comprise an elongated structure, in particular for accommodating or housing several connection arrangements as described further below. The connection arrangement may generally comprise one or more parts, which may be lose or connected or attached to one another, e.g., such as the fastener element, the counter element, and potentially and optionally further elements, such as a washer, for example. The busbar connector may be a set of the housing the one or more connection arrangements, where the housing and the connection arrangements, in particular its elements, may need to be assembled. Alternatively, the busbar connector may be partially assembled or pre-assembled, e.g., by having the elements of the connection arrangements attached to one another, specifically the fastener element and the counter element, and fixed or attached to the housing, specifically such that only the busbars remain to be inserted in between the fastener element and the counter element, the housing holding the connection arrangement(s) in place or accommodating them.

The shaft section may extend along a partial or full length of the shaft. Specifically, there may be one or more, e.g., two shaft sections, wherein the first shaft section may be differently designed than the second shaft section, e.g., in a part excluding an outher thread on the first shaft section be rotationally non-symmetrical with respect to the longtiduinal axis. For example, the second shaft section may be designed rotationally symmetrical in a part excuding an outher thread on the second shaft section with respect to the longitudinal axis. That the shaft section is for opposing ends of the busbars may mean in particular that the shaft section is for facing the opposing ends of the busbars and/or for being placed or arranged in between the opposing ends of the busbars, in particular inside a busbar distance formed between the opposing ends, in particular longitudinal ends, of the busbars.

The inventor has found that typically the busbar distance between the ends of busbars, e.g. 40 mm, is limiting the size and thus (electrical) mass of the connection arrangement(s), specifically the fastener element and thereby the counter element, which may be important to conduct high currents, such as rated currents of 355 A. For example, if the shaft needs to fit the busbar distance of 40 mm, the shaft and consequently a head of the fastener element and the counter element are normally dimensioned in relation to the shaft for a normal fastener element such as a screw. Accordingly, such connection arrangement and consequently busbar connector may be limited to lower rated currents of 250 A, for example, and not also be used for 355 A, where another busbar connector may be needed to be used. This creates problems and costs because different types of busbar connectors need to be offered, provided, carried, kept in stock, etc.

However, with the invention, by using the fastener element with the shaft section as suggested herein, a special type of fastener element is being used, which is designed or accommodated to fit the busbar distance while still having sufficient electrical mass to even conduct higher rated currents of 355 A in addition to rated currents of 250 A. For example, while the shaft section between the two opposing first portions and/or the first of two shaft sections may be designed to be accommodated within the busbar distance by virtue of a reduced size compared to conventional fastener elements, e.g., screws, it may have otherwise, e.g., on the opposing second portions and/or the second shaft section be of a larger size than it would typically have in a conventional fastener element. Hence, the fastener element may be designed with such a high electrical mass, in particular at the shaft, specifically at the opposing second portions and/or the second shaft section, and/or a head and similarly the counter element may be designed with higher electrical mass to allow the connection arrangement(s) with the same busbar connector to be used for different busbar systems, where a rated current of 250A or 355A may be required, for example.

In particular, the at least one connection arrangement may be configured with dimensions suitable to electrically conduct a rated current between 200A and 400A, in particular of 250A and 355A, between the pair of busbars. Generally, this may in particular be achieved by providing a high (electrical) mass at the connection arrangement, in particular on the shaft, a head of the fastener element and/or the counter element. This is enabled by the design with the two opposing first portions of smaller thickness than the two opposing second portions and/or the first shaft section, whereby for example an outer thread or generally outer dimensions may be employed elsewhere than where the respective opposing portions and/or shaft section is adjacent to or facing the ends of the busbars. For example, a relevant shaft section and/or opposing sections for attachment to the counter element, e.g., an outer thread, may be large or, in other words, of a large dimension despite the limitation of the busbar distance, enabling to use a larger counter element, allowing to safely conduct higher currents or, in other words, be rated for higher currents.

In particular, the fastener element, more particularly its shaft section or shaft, and/or the counter element may be configured with dimensions suitable to electrically conduct the herein specified rated current. Further, the connection arrangement may be configured for electrically contacting the busbars with at least an end portion of the fastener element.. The end portion may be located at an end of the fastener element and/or be arranged at the shaft section. This end portion may be a head, for example In particular the end portion of the fastener element may be configured with dimensions suitable to electrically conduct the herein specified rated current, e.g., in the range of 200A to 400A or 250A and 355A. In particular, the end portion, e.g., head of the fastening element may have a larger contact surface for contacting the busbars with the proposed fastener element compared to conventional fastener elements. Specifically, the shaft section at the head may be reduced in cross-section compared to a conventiona fastener element and at its interface to the portion, e.g., head, thus provide a comparatively larger contact surface.

In an example, the shaft section may be comprising an outer thread. A part of the shaft section without or, in other words, excluding the outer thread may be rotationally non-symmetrical with respect to a longitudinal axis of the shaft. This may additionally or alternatively enable the shaft section to fit well in between the the pair of busbars, in particular with its rotationally non-symmetrical design, wherein for example a large outer thread or generally outer dimensions may be employed elsewhere than where the shaft section is adjacent to or facing the ends of the busbars. For example, a relevant shaft section for attachment to the counter element, e.g., an outer thread, may be large or, in other words, of a large dimension despite the limitation of the busbar distance, enabling to use a larger counter element, allowing to safely conduct higher currents or, in other words, be rated for higher currents. For example, while the non-symmetrical shaft section may be designed to be accommodated within the busbar distance by virtue of not requiring a symmetric shaft section as in conventional fastener elements, e.g., screws, it may have other structures or typical structures, such as an outer or exterior thread at the shaft section or at a further shaft section, which may be of a larger size than it would typically have in a conventional fastener element.

In an example, the shaft section may be comprising two opposing first portions for facing the ends of the busbars. Also, the shaft section may be comprising two opposing second portions in between or adjacent to the two opposing first portions. The shaft section may be having a smaller thickness between the two opposing first portions than between the two opposing second portions. Hence, the shaft section may, between opposing first portions, have a smaller thickness, e.g. diameter, for fitting inside the busbar distance, specifically such that they are space apart from the busbars for play. On the other hand, the second portions may have a large thickness, e.g., diameter.

In an example, at least one of the two second portions or both second portions may be comprising an outer thread for attachment to an inner thread of the counter element. The outer or, in other words, exterior thread may be dimensioned larger than the first portions and than a conventional fastener element to be fitted in between the busbar distance.

In an example, the fastener element may be a screw with a head and the counter element may be a flange nut for electrically connecting the two collineraly arranged busbars between the flange nut and the head. By virtue of the head and the flange nut, the connection arrangement may be very easily and securely connected to the busbars.

In an example, the head and/or the flange nut may be having a polygonal shape. The polygonal shape may be provided on a portion of the head and/or flange nut which is to grip or grasp the fastener element or counter element for fastenining it. In particular, the polygonal shape may be provided on an exterior or circumference of the head or counter element.

In an example, the busbar connector may be comprising two or more connection arrangements, the housing being configured to receive each one of the connection arrangements for electrically connecting one pair of collinearly arranged busbars. Further, in particular, the busbar connector may be comprising five connection arrangements. Each one of the five pairs of busbars may be representing an individual phase, specifically N, L1, L2, L3, and PE, which may be connected mechanically and electrically through the busbar connector.

In an example, the housing may be having an elongated structure with at least two receiving sections for receiving each one of the two or more connection arrangements. Moreover, the elongated structure may be comprising at least one intermediate section between the two receiving sections. The at least one intermediate section may be configured such that it may fit into a busbar distance between the (opposing) ends of the pair of collinearly arranged busbars and/or the pair of busbars may slide into a space between the fastener element and the counter element. In particular, the one or more intermediate sections may be provided with a thickness corresponding in size to the busbar distance or less.

In an example, the housing may be comprising a housing thread for attachment to a thread of the fastener element. Thereby, the fastener element may be secured or fastened relative to the housing with ease, in particular by using the thread of the fastener element, which may also be used for the attachment to the counter element. Additionally, or alternatively, the housing may be comprising an undercut or other locking or snapping elements or features for locking or snapping the fastener element in place relative to the housing. For example, the fastener element may comprise one or more indentations for this purpose.

In an example, the busbar connector may be further comprising a spacer, and the housing may be configured to receive the spacer to keep space between the housing and a busbar connector holder for receiving the busbar connector. The busbar connector holder may be alternatively referred to as a busbar holder, busbar carrier or busbar connector carrier. Similar to the housing, it may be made from an electrically non-conductive material. The busbar connector holder may be configured with openings for receiving the busbars into a holder space therein, into which the busbar connector may be inserted. For example, the housing may comprise one or more, e.g., two, spacer openings. These spacer openings may receive one or more spacers for spacing apart the housing from a busbar connector holder. In this way, the distance between the housing and the busbar connector holder may be regulated, in particular depending on a thickness and/or number of busbars stacked on top of one another and being used.

In an example, the housing may be comprising a cut-out for a washer of the at least one connection arrangement. Thereby, the washer may be securely placed or located inside the cut-out and further strengthen the at least one connection arrangement without comprising the structure of the housing.

In an example, the housing may be comprising an opening for insertion of the fastener element therethrough. Also, the housing may be comprising an undercut for locking the fastener element inside the opening. The undercut may for example be located inside the opening. The undercut may be any locking or snapping element or feature for locking or snapping the fastener element in place relative to the housing. For example, the fastener element may comprise one or more indentations for this purpose.

In an example, the busbar connector may be further comprising a cover. The cover may be configured to cover the connection arrangement(s). The housing may be comprising an attachment section for attaching the cover to the housing. Specifically, one or more attachment sections may be provided for attaching the cover to the housing, in particular in a latching manner.

According to a second aspect of this disclosure, there is provided a busbar system comprising a busbar connector according to the first aspect of this disclosure, the busbar connector electrically connecting at least one pair of collinearly arranged busbars, in particular five pairs of collinearly arranged busbars.

In an example, the busbar system may be comprising or be in the form of a distribution cabinet, in particular meter cabinet. The meter cabinet may be configured to meter the flow of electrical current through the busbars. The busbar system may in particular comprise two distribution fields, e.g., meter fields, with one or more busbars, e.g., five busbars each, which are electrically connected to one another by the busbar connector.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows an exploded view of a busbar connector;
Figure 2 shows a perspective view of a housing of the busbar connector of Fig. 1;
Figure 3 shows a perspective view on a fastener element for a connection arrangement of the busbar connector of Fig. 1;
Figure 4 shows a perspective view on an alternative fastener element for the connection arrangement of the busbar connector of Fig. 1;
Figure 5 shows an exploded view of the busbar connector of Fig. 1 in a busbar system;
Figure 6 shows a perspective view of the busbar connector of Fig. 1 in an alternative busbar system;
Figure 7 shows a perspective partial view on a part of the busbar system of Fig. 5;
Figure 8 shows a perspective partial view on a part of the busbar system of Fig. 6; and
Figure 9 shows a perspective partial view on the busbar connector used in the busbar system of Figs. 5 and 7.

The Figures are schematic only and not true to scale. In principle, identical or like parts, elements and/or steps are provided with identical or like reference numerals in the Figures.

### DETAILED DESCRIPTION OF THE INVENTION

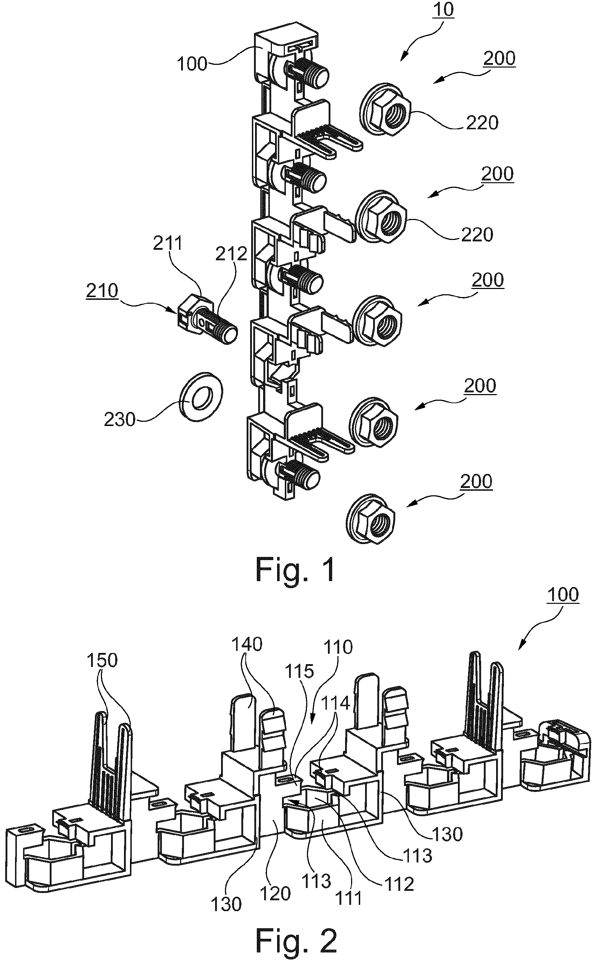

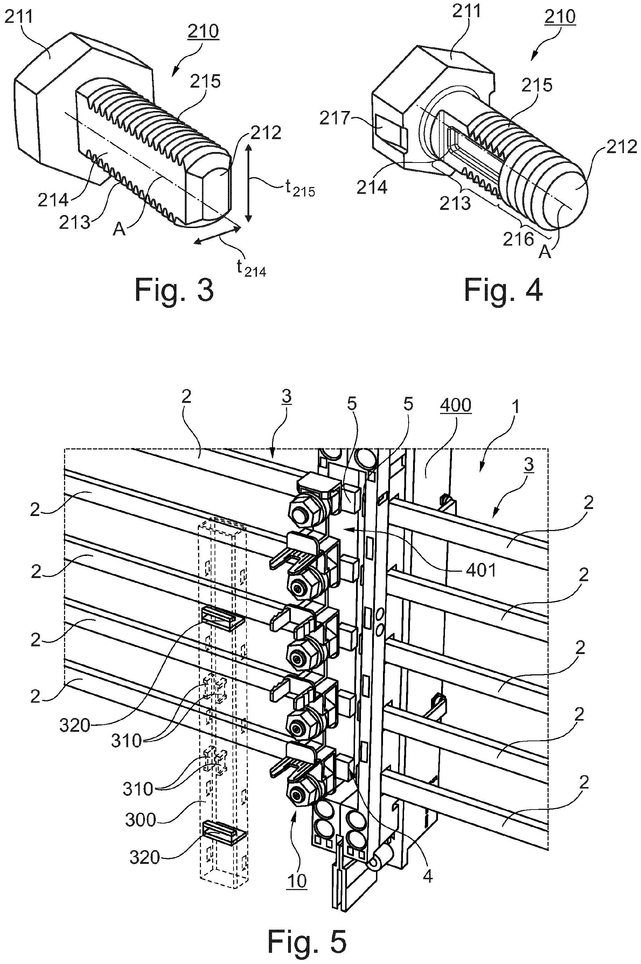

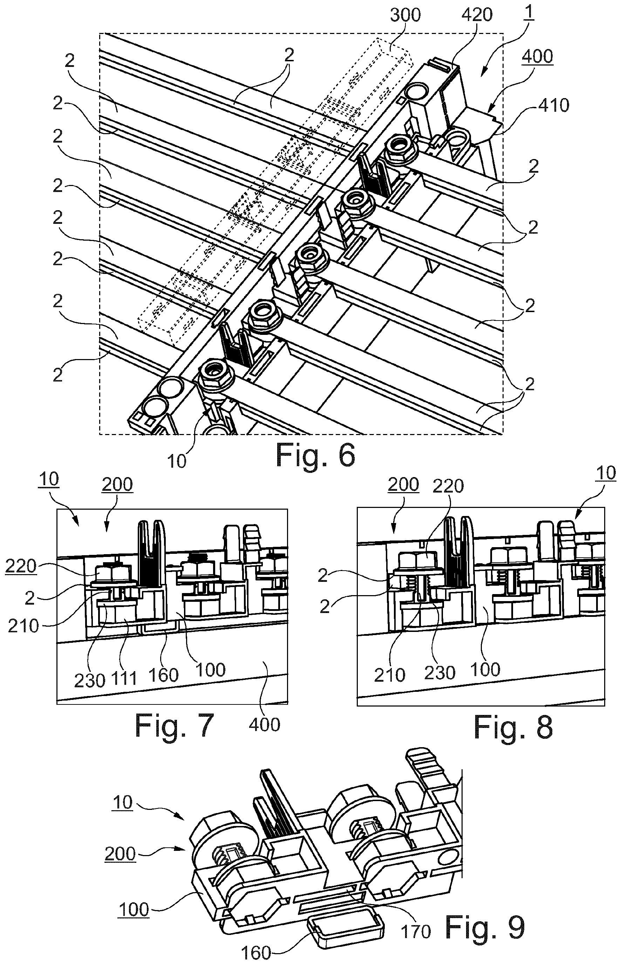

Fig. 1 shows an exploded view of a busbar connector 10 for use in a busbar system 1 as exemplary shown in Figs. 5 and 6. The busbar connector 10 comprises a housing 100 and several connection arrangements 200. In this example, there are five connection arrangements 200. Further, in this example, the housing 100 comprises or is made from an electrically non-conductive material, such as plastic, and the connection arrangements 200 comprise or are made from one or more electrically conductive materials, such as metal, e.g., any one or more of copper, steel, tin, brass, or similar.

In this example, the busbar connector 10 is suitable for an electrical connection in the busbar system 1 according to standard VDE0603. As seen in Fig. 5, there are two distribution fields 3 or busbar fields, in particular meter fields, that have a busbar distance 4 (of, e.g., 40 mm) in between longitudinal ends 5 of collinearly or adjacently arranged pairs of busbars 2 of each one of the distribution fields 3.

The busbar system 1 comprises the two distribution fields 3 with the collinearly or adjacently arranged pairs of busbars 2 and the busbar connector 10 electrically connecting these with one another. For this purpose, the busbar connector 10 is arranged with its connection arrangements 200 inside the busbar distance 4 or, in other words, busbar space between the collinearly arranged pairs of busbars 2 or, in other words, busbars 2 arranged such that their longitudinal ends 5 are facing one another (see Fig. 5).

Each one of the five pairs of busbars 2 may be representing an individual phase, specifically N, L1, L2, L3, and PE, which may be connected mechanically and electrically through the busbar connector 10.

In this example, according to standard VDE0603, the busbar system 1 is mounted with 12x5mm copper busbars 2 in Fig. 5 and with 2x 12x5mm (12x10mm) copper busbars 2 in Fig. 6. The busbar system 1 of Fig. 5 with 12x5mm busbars 2 achieves a rated current of 250A and the busbar system 1 of Fig. 6 with 2x 12x5mm busbars 2 achieves a rated current of 355A. Despite the different rated current, the same busbar connector 10 may be used for either of the two busbar systems 1 of Fig. 5 and 6 as explained in more detail below.

As seen in Fig. 1, the busbar connector 10 has a housing 100 with an elongated structure. In particular, the housing 100 is configured to receive all of the exemplary five connection arrangements 200, which are exemplary designed equal in this example.

Each one of the five connection arrangements 200 at least comprises a fastener element 210 and a counter element 220 for the fastener element 210. Further, optionally, each one of the connection arrangements 200 comprises a washer 230 to be placed in between the fastener element 210 and the counter element 220. In each one of the connection arrangements 220, the fastener element 210 exemplary comprises an exterior thread (see Figs. 3 and 4) and the counter element 220 comprises a complementary interior or inner thread 221 for fastening or attaching the counter element 220 to the fastener element 210, as exemplary shown in Figs. 5 to 9 and in particular with the washer 230 in between.

Morreover, exemplary, the fastener elements 210 are shown to be configured as screws with a head 211 and a shaft 212, which comprises the exterior or outer thread. Alternatively, however, any other fastener elements 210 such as bolts without threads but with other means to establish a connection to a counter element 220 may be used. However, advantageously, the screw may be easily fastened and released when necessary. Similarly, the counter element 220 may be designed in a different way than shown in Fig. 1, where it is designed as a flange nut. Moreover, in this example, both, the head 211 and the flange nut have a polygonal shape. For example, the head 211 and/or the flange may have a polygonal shape for an accordingly shaped or configured tool for fastenining either of the two elements 210, 220.

When connecting the fastener element 210 to the counter element 220 in each connection arrangement 200, a pair of the collinearly arranged busbars 2 may be electrically connected with one another through the connection arrangement 200. Specifically, the electrical connection may be established through the counter element 220 directly contacting the busbars 2 and/or the washer 230 directly contacting the busbars 2, as may be seen in Figs. 7 and 8. On the other hand, the shaft 212 of the fastener element 210 may be designed such that it is spaced apart from opposing ends 5 of the busbars 2 (see Fig. 5). Thereby, some play may be provided in between the shaft 212 and the busbars 2. Electrical current may still be conducted through the counter element 220 and/or the washer 230 and via the head 211 and shaft 212, but in this variant not directly from the busbar 2 to the shaft 212 due to the lack of direct contact.

The exploded view of Fig. 1 shows a partially assembled busbar connector 10, where some of the fastener elements 210 are assembled with the housing 100 and one is not, similar to the washer 230, for illustrative purposes. Generally, the busbar connector 10 may have any assembled state between unassembled, i.e., all parts such as housing 100 and the elements 210, 220, 230 of the connection arrangements 200 may be disassembled or not connected to one another, and fully assembled, i.e., all parts are connected to one another, as exemplary shown in Figs. 6 to 9.

Fig. 2 shows a perspective view of the housing 100 of the busbar connector 10 of Fig. 1. As may be seen in Fig. 2, the housing 100 may generally have five receiving sections 110, each one being configured to receive one of the connection arrangements 200. These receiving sections 110 may be adjacently located next to one another along a direction of longitudinal extension of the housing 100. Specifically, the receiving sections 110 may be spaced apart from one another by intermediate sections 120 or, in other words, intermediate sections 120 may be connecting the adjacent receiving sections 110. Alternatively, the receiving sections 110 may be provided without the intermediate sections 120 or as separate parts of the overall housing 100 or, in other words, one housing 100 with a single receiving section 110 may be provided for each one of the connection arrangements 200 and thus pairs of busbars 2. Moreover, the housing 100 may comprise wall sections 130 which may be separating or forming a wall between one receiving section 110 and one intermediate section 120 for every two receiving sections 110 of the housing 100.

In this example, each receiving section 110 comprises a head segment 111 for receiving the head 211 of the fastener element 210. Specifically, the head segment 111 may comprise an opening 112, through which the fastener element 210, specifically its shaft 212, may be inserted. The head segment 111 may also be polygonally shaped such that it corresponds in shape to the head 211 and may receive, in particular enclose, it.

Moreover, the receiving section 110 exemplary comprises a housing thread 114, which may be arranged opposite of the head segment 110 and/or at distance from the head segment 110. For example, the housing thread 114 may be in the form of a molding or shaping of the housing 110, in particular of a limit or end stop segment 115 of the housing 100. The limit or end stop segment 115 may be configured to hold busbars 2 in position or place, specifically between the head segment 111 and the limit or end stop segment 115. The housing thread 114 may be an interior thread as shown in Fig. 2. The housing thread 114 may be configured to correspond or, in other words, be complementary to the exterior thread of the fastener element 210, allowing to secure or align the fastener element 210 relative to or inside the housing 100. As seen in Fig. 2, the housing thread 114 may only be formed partially at the housing 210 with two substantially opposite pieces of a thread 114. In this way, the housing thread 14 may interlock with the exterior thread of the fastener element 210 simply by pushing the fastener element 210 through the opening 112 and with its head 211 into the head segment 111, which may thereby enclose the head 211.

Also, as seen in Fig. 2, in this example, there is a cut-out 113 between the housing thread 114 and the head segment 111 in the housing 100, which is configured to accommodate or receive the washer 130. Specifically, the cut-out 113 is dimensioned larger, in particular with a larger radial extension, than the head segment 111 such that the housing 100 may receive a larger washer 130 than the head 211 of the fastener element 210.

Figs. 3 and 4 show perspective views on variants of fastener elements 210 for the connection arrangements 200 of the busbar connector 10. Both fastener elements 210 are in the form of a screw with head 211 and shaft 212, which generally has a longitudinal extension along a longitudinal axis A. Also, both fastener elements 210 comprise at least one shaft section 213.

In the example of Fig. 3, the shaft section 213 comprises the entire shaft 212. Also, it comprises two opposite first portions 214 facing the opposing ends 5 of the busbars 2. In between the two opposite first portions 214, there are in this example two opposite second portions 215 having the exterior or outer thread for attachment to the counter element 220. A first thickness t₂₁₄ of the shaft section 213 is smaller between the two first opposing sections 214 than a second thickness t₂₁₅ between the two second opposing sections 215. Thereby, the shaft 212 may generally have a large mass and outer diameter, except for the part with the opposing first portions 214, where the shaft 212 is facing the ends 5 of the busbars 2.

Thereby, the busbar distance 4 of e.g. 40 mm is not or at least to a lesser degree limiting the size and thus electrical mass of the connection arrangements 200, specifically the fastener element 210 and thereby the counter element 220, which may be relevant to conduct high currents. Specifically, thereby, the fastener element 210 may be designed with such a high electrical mass, in particular at the shaft 212 and/or the head 211 and similarly the counter element 220 may be designed with higher electrical mass to allow the connection arrangement 200 with the same busbar connector 10 to be used for either of the two busbar systems 1 of Fig. 5 and 6, where a rated current of 250A or 355A is required. For example, Figs. 3 and 4 show a metric ISO standard thread M8 according to DIN 13-1 on the shaft 212. More particularly, due to the rotationally non-symmetrical design of a part of the shaft section 213 excluding its outer thread or generally the reduced cross-section of the shaft section 213 compared to standard shafts of fastener elements 210, the interface between the head 211 of the fastener element 210 and the shaft section 213 enables that the contact surface of the head 211 is larger, which may be used for electrically contacting the busbars 2 and conducting rated currents of 250A and 355A.

In particular, as shown in Fig. 3, the shaft section 213 may be comprising two opposing first portions 214 for facing the ends 5 of the busbars 2. The shaft section 213 may be comprising two opposing second portions 215 adjacent to or in between the two opposing first portions 214, the shaft section 213 having a smaller thickness between the two opposing first portions 214 than between the two opposing second portions 215.

Further, as shown in Fig. 4, the fastener element 210 may be comprising a further shaft section 214, the shaft section 213 comprising a cross-section that is narrower than a cross-section of the further shaft section 214 so that the pair of collinearly arranged busbars 2 can be spaced apart by a distance smaller than the cross-section of the further shaft section 214.

To design the fastener element 210 of Fig. 3, the first portions 214 may comprise a face, in particular flat or substantially flat. Hence, unlike the second portions 215, the outer thread may be omitted on one or both of the two opposing first portions 214. The two first portions 214, in particular their faces, may for example be milled faces. Alternatively, or additionally, the fastener element 210 may be additively manufactured or die casted with the opposing first portions 214 having the faces.

Compared to Fig. 3, Fig. 4 shows a fastener element 210 which was for example additively manufactured or die casted such that the first opposing portions 214 extend only along a part of the full length of the shaft 212. Specifically, while the shaft sections 213 may substantially be similar in design between the fastener elements 210 of Figs. 3 and 4, the fastener element 210 of Fig. 4 may comprise a further or second shaft section 216 without a flat or milled face, in particular at the end of the shaft 212. Specifically, the second shaft section 216 may comprise an outer thread around the entirety of its circumference.

Exemplary, the fastener element 210 exemplary at its head 211 comprises one or more, in particular two opposing, indentations 217. These indentations 217 may be located on outer or circumferencial surfaces of the head 211. They may complement undercuts or other locking or snapping elements or features (not shown) inside the head segment 111 for locking or snapping the fastener element 210 inside the housing 100, specifically similar to or in addition as it is provided by the housing thread 114.

Apart from the exemplary embodiments of the fastener element 210 as shown in Figs. 3 and 4, generally, any fastener element 210, such as but not limited screw with a part of a shaft section 213 excluding its outer thread that is rotationally non-symmetrical with respect to its longitudinal axis A, may be used to provide the same effect and advantages described herein with respect to the suitability of the busbar connector 10 to be used for different rated currents, specifically but not only for 250 A and 355 A. For example, instead of two first opposing portions 214 with faces, other geometries and more than two opposing portions 214 or more faces or less may be used. Also, as shown by example of Fig. 4, the shaft section 213 may only be a longitudinal part of the entire shaft 212. The use of such special fastener element 210 allows to generally design a fastener element 210 with higher electrical mass and for a counter element 220 with higher electrical mass despite any limitation imposed onto the connection arrangement 200 by virtue of the busbar distance 4 between the busbars 2 requiring the fastener element 210 to fit in between, which enables the use for high rated currents when using thicker or generally larger or more busbars 2, e.g., stacked busbars 2, as shown in the example of Fig. 6.

Fig. 5 shows an exploded view of the busbar connector 10 of Fig. 1 in a busbar system 1 with two distribution fields 3 with single busbars 2 collinearly aligned in five pairs. For example, a rated current of 250 A may be transmitted through each pair of busbars 2.

To insert the busbar connector 10 in between the pairs of busbars 2, the busbar connector 10 may be positioned with its housing 100, specifically its intermediate sections 120, inside a holder space 401 of a busbar connector holder 400. Specifically, the busbar connector holder 400 may be a plastic part or housing, into which the busbars 2 may be inserted, specifically such that the busbars 2 are provided as collinearly aligned pairs with the busbar distance 4 or space in between the ends 5 of the busbars 2 inside the holder space 401.

After inserting the busbar connector 10 nside the holder space 401 and in between the busbars 2, the busbar connector 10 may simply fall into the correct arrangement with its receiving sections 110 and the connection arrangements 200 inside the busbar distance 4 through the force of gravity. Specifically, the intermediate sections 120 may be comprising a thickness equal to or smaller than the busbar distance 4. Accordingly, the intermediate sections 120 may be moved in between the busbars 2. When positioning them between the ends 5 of the busbars 2 and releasing the busbar connector 10, due to the force of gravity, the busbar connector 10 will move down along its intermediate sections 120 and fall into place with its connection arrangements 200 having therebetween the busbars 2.

Consequently, the counter elements 220 may be fastened onto the busbars 2, thereby securing the busbars 2 in place and preventing them from being released accidentally. Thereby, the electrical contact for distributing the rated current of 250 A from busbars 2 of one of the distribution fields 3 to the busbars 2 of the other distribution fields 3 is established.

Further, as Fig. 5 shows, there may be a cover 300, e.g., a transparent cover 300, to cover the busbar connector 10 and hence prevent accidential contact during distribution of current. The cover 300 covers the busbar connector 10 inside the busbar connector holder 400. For this purpose, the cover 300 comprises first openings 310. Exemplary, two rows of two adjacent first openings 310 are shown for the cover 300 of Fig. 5. Alternatively, there may be one row of two adjacent first openings 310 or more rows, or there may be single adjacent first openings 310 in one or more rows. These first openings 310 fit one or more attachment segments 140 of the housing 100, which are herein exemplary configured as lugs to snap into the first openings 310. Moreover, the cover 300 of this example exemplary comprises two holding sections 150 for holding the housing 100 and thereby the busbar connector 10 safely when handling it, specifically installing it in the busbar connector holder 400. Second openings 320 of the cover 300 are configured to receive the holding sections 150 configured herein exemplary with tabs. Alternatively, there may be just a single holding section 150 with one or more tabs.

Fig. 6 shows a perspective view of the busbar connector 10 of Fig. 1 in an alternative busbar system 1, which has two busbars 2 on each side of the pair of busbars 2 stacked on top of one another to achieve a rated current of 355 A in this example. Also, in Fig. 6, the busbar connector 10 is inserted inside the holder space 401 and electrically connects the distribution fields 3 with one another.

For better view onto the mounting of the busbar connector 10 inside the busbar connector holder 400 in Fig. 6, a second segment 420 of the busbar connector holder 400 is omitted on a right side, wherein the busbar connector holder 400 is herein formed with one or two first segments 410 and two second segments 420 as seen on the left side of the busbar connector holder 400.

Fig. 7 shows a perspective partial view on a part of the busbar system 1 of Fig. 5. As seen here, a spacer 160 is spacing apart the busbar connector holder 400, specifically its first segment 410, from the housing 100, for the purpose of which it may be inserted into a spacer opening 170 (see Fig. 9) for at least partially receiving the spacer 160 therein. For example, the housing 100 may comprise two or more of such spacer openings 170, which may be provided at a distance from one another to accommodate two spacers 160 to keep the housing 100 at a distance from the busbar connector holder 400.

The purpose of the spacer 160 or spacers 160 is that with a single busbar 2 or generally thinner busbars 2 as shown in Fig. 5, to secure or arrange the busbar connector 10 in place inside the busbar connector holder 400, it may be advantageous to have some distance between the housing 100 and a face of the busbar connector holder 400 during the attachment of the busbar connector 10 to the busbars 2.

However, as shown in Fig. 8, which shows a perspective partial view on a part of the busbar system 1 of Fig. 6, with stacked busbars 2 or generally thicker busbars 2, there may be no or less distance between the housing 100 and busbar connector holder 400 and hence, no spacers 160 are required. Accordingly, irrespective of the two alternatives of distribution fields 3 discussed herein, the busbar connector 10 may advantageously be mounted with ease inside the holder space 401.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of elements, parts, sections or segments and similar as first, second, etc. as provided herein is merely intended to make the elements referenceable and distinguishable from one another. By no means does the designation of elements constitute a limitation of the scope of this disclosure. For example, when this disclosure describes a second element, a first or second step element do not need to be present yet alone be performed before the third step unless they are explicitly referred to as being required per se or before the third step.

Any reference signs in the claims should not be construed as limiting the scope.

## Claims

1. A busbar connector (10) with a housing (100) and at least one connection arrangement (200), the housing (100) being configured to receive the at least one connection arrangement (200), and the at least one connection arrangement (200) comprising a fastener element (210) and a counter element (220) for electrically connecting a pair of collinearly arranged busbars (2), the fastener element (210) comprising a shaft (212) with a shaft section (213) for opposing ends (5) of the busbars (2), wherein:
(a) the shaft section (213) comprises two opposing first portions (214) for facing the ends (5) of the busbars (2), and the shaft section (213) comprises two opposing second portions (215) adjacent to or in between the two opposing first portions (214), the shaft section (213) having a smaller thickness between the two opposing first portions (214) than between the two opposing second portions (215); and/or
(b) the fastener element (210) comprises a further shaft section (214), the shaft section (213) comprising a cross-section that is narrower than a cross-section of the further shaft section (214) so that the pair of collinearly arranged busbars (2) can be spaced apart by a distance smaller than the cross-section of the further shaft section (214).

2. The busbar connector (10) of claim 1, the at least one connection arrangement (200), in particular an end portion (211) of the fastener element (210), being configured with dimensions suitable to electrically conduct a rated current between 200A and 400A between the pair of busbars (2).

3. The busbar connector (10) of claim 1 or 2, the shaft section (213) comprising an outer thread and a part of the shaft section (213) without the outer thread being rotationally non-symmetrical with respect to a longitudinal axis (A) of the shaft (212).

4. The busbar connector (10) of any one of the previous claims, at least one of the two first portions (214) comprising a face for facing an end (5) of one of the busbars (2).

5. The busbar connector (10) of any one of the previous claims, at least one of the two second portions (215) comprising an outer thread for attachment to an inner thread (221) of the counter element (220).

6. The busbar connector (10) of any one of the previous claims, the fastener element being a screw with a head (211) and the counter element (220) being a flange nut for electrically connecting the two collineraly arranged busbars (2) between the flange nut and the head (211).

7. The busbar connector (10) of claim 6, the head (211) and/or the flange nut having a polygonal shape.

8. The busbar connector (10) of any one of the previous claims, the busbar connector (10) comprising two or more connection arrangements (200), the housing (100) being configured to receive each one of the connection arrangements (200) for electrically connecting one pair of collinearly arranged busbars (2).

9. The busbar connector (10) of claim 8, the housing (100) having an elongated structure with at least two receiving sections (110) for receiving each one of the two or more connection arrangements (200), and the elongated structure comprising at least one intermediate section (120) between the two receiving sections (110), the at least one intermediate section (120) being configured such that it may fit into a a busbar distance (4) between the ends (5) of the pair of collinearly arranged busbars (2) and the pair of busbars (2) may slide into a space between the fastener element (210) and the counter element (220).

10. The busbar connector (10) of any one of the previous claims, the housing (100) comprising a housing thread (114) for attachment to a thread of the fastener element (210).

11. The busbar connector (10) of any one of the previous claims, the busbar connector (10) further comprising a spacer (160), and the housing (100) being configured to receive the spacer (160) to keep space between the housing (100) and a busbar connector holder (400) for receiving the busbar connector (100).

12. The busbar connector (10) of any one of the previous claims, the housing (100) comprising a cut-out (113) for a washer (230) of the at least one connection arrangement (200).

13. The busbar connector (10) of any one of the previous claims, the housing (100) comprising an opening (112) for insertion of the fastener element (210), and the housing (100) comprising an undercut for locking the fastener element (210) inside the opening (112).

14. The busbar connector (10) of any one of the previous claims, the busbar connector (10) further comprising a cover (300), and the housing (100) comprising an attachment section (140) for attaching the cover (300) to the housing (100).

15. A busbar system (1) comprising a busbar connector (10) according to any one of the previous claims, the busbar connector (10) electrically connecting at least one pair of collinearly arranged busbars (2).
